# EUROPÄISCHE PATENTSCHRIFT

(11) **EP 2 606 248 B1**
(45) Veröffentlichungstag und Bekanntmachung des Hinweises auf die Patenterteilung: **26.11.2014**
(21) Anmeldenummer: 11741186.8
(22) Anmeldetag: 01.08.2011
(51) Int. Cl.: F16C 33/48, F16C 33/49, F16C 33/46, F16C 43/06, F16C 19/28

(54) **DOPPELKAMMKÄFIG FÜR EIN ZWEIREIHIGES ZYLINDERROLLENLAGER MIT MASSENAUSGLEICH**
DOUBLE ROLLER CAGE FOR A DOUBLE ROW CYLINDER ROLLER BEARING WITH MASS COMPENSATION
CAGE DE TYPE DOUBLE PEIGNE POUR PALIER À ROULEAUX CYLINDRIQUES À DEUX RANGÉES, DOTÉE D'UN ÉQUILIBRAGE DES MASSES

(30) Priorität: 21.08.2010 DE 102010035061
(43) Veröffentlichungstag der Anmeldung: 26.06.2013
(73) Patentinhaber: Schaeffler Technologies GmbH & Co. KG, 91074 Herzogenaurach (DE)
(72) Erfinder: MÜLLER, Karl, 97508 Grettstadt (DE); ROMAN, Werner, 97078 Würzburg (DE)
(86) Internationale Anmeldenummer: PCT/EP2011/063223
(87) Internationale Veröffentlichungsnummer: WO 2012/031831

(56) Entgegenhaltungen:
- DE-A1-102004 043 374
- DE-A1-102008 060 320
- GB-A- 733 521
- JP-A- 8 184 319
- JP-A- 2001 208 075

## Beschreibung

### Gebiet der Erfindung

Die Erfindung betrifft einen Doppelkammkäfig gemäß Anspruch 1.

### Hintergrund der Erfindung

Mehrreihige Zylinderrollenlager sind bereits bekannt. Sie werden beispielsweise in größeren Fahrzeuggetrieben, in Getrieben von Maschinenanlagen oder in Werkzeugmaschinen, wie etwa als Stützrollen in Walzanlagen, eingesetzt, bei denen die Wälzlager hohen radialen, gegebenenfalls auch axialen Belastungen und/oder hohen Drehzahlen ausgesetzt sind. In einem solchen Lager sind zwei oder mehr Reihen von Wälzkörpern zwischen einen Außenring und einem Innenring, die bordlos oder mit Borden zur Halterung und Führung der Lagerreihen ausgebildet sein können, angeordnet. Die Zylinderrollen sind meist in Käfigen mit kammartig von einem Mittelteil einseitig oder beidseitig in axialer Richtung vorstehenden Stegen aufgenommen und auf Abstand gehalten. Eine Käfiganordnung kann, je nach Lagerbauart und Anzahl der Lagerreihen, als Einzel- oder Doppelkammkäfige, gegebenenfalls auch als eine Kombination mehrerer solcher Käfige, ausgebildet sein. Häufig sind zweireihige Zylinderrollenlager mit einem rollengeführten Doppelkammkäfig aus Messing versehen.

Die DE 29 22 361A1 zeigt ein zweireihiges Zylinderrollenlager mit einem Außenring und einem Innenring, zwischen denen zwei Fensterkäfige, je ein Käfig für eine Lagereihe, angeordnet sind. Die Käfige bestehen jeweils aus einem axial äußeren Kammteil mit Stegen und einem axial inneren Deckelteil mit Zentriernasen. Bei der Montage werden zunächst die beiden Deckelteile auf einem doppelseitigen Innenbord des mit allseitigen Borden zur Führung und Halterung der Wälzkörper versehenen Innenringes aufgebracht. Anschließend werden die Rollen beider Lagerreihen eingefüllt sowie mit Hilfe der Zentriernasen in einem erforderlichen Abstand angeordnet. Abschließend werden die Kammteile von axial außen zwischen die Rollen eingeschoben. Die beiden Fensterkäfige bilden im montierten Zustand einen zweiteiligen symmetrischen Doppelkammkäfig.

Die DE 600 21 830 T2 offenbart einen einteiligen Doppelkammkäfig für ein zweireihiges Zylinderrollenlager, bei dem von einem zentralen Ringteil beidseitig zueinander versetzte Stege axial hervorstehen. Um die Gefahr von Rissen und Brüchen, insbesondere an den Verbindungsstellen zwischen den Stegen und dem Ringteil zu verringern, welche durch hohe Biegebeanspruchungen aufgrund von radial übertragenen Vibrationen oder abrupten Beschleunigungen und Abbremsungen des Wälzlagers entstehen können, ist die Käfigkonstruktion derart konzipiert, dass sie eine bestimmte Biegebedingung erfüllt. Demnach soll die Biegebelastung der Stege und des Ringteils annähernd gleich sein. Der Käfig ist auf beiden Lagerreihen geometrisch gleich ausgebildet.

Die JP 2001 208 075 A zeigt ebenfalls einen Doppelkammkäfig für ein zweireihiges Zylinderrollenlager. Das Ringteil und die Stege weisen Bohrungen auf, wobei die Bohrungen in den Stegen für beide Lagerreihen gleich sind.

Die DE 10 2008 060 320 A1 zeigt einen weiteren Doppelkammkäfig. Bei diesem Käfig verdicken sich die Stege an ihrer radial innen gelegenen Grundseite von außen nach innen zu einem Ringteil hin. Dadurch wird eine erhöhte Festigkeit des Käfigs erreicht und insbesondere die Bruchgefahr an den Stegansätzen bei der Montage und im Betrieb verringert. Die Verdickungen der Stege sind an beiden Lagerreihen gleich ausgebildet.

Die genannten Doppelkammkäfige weisen allesamt eine symmetrische Stegkonstruktion zwischen den beiden Lagerreihen auf. Die Montage von zweireihigen Zylinderrollenlagern mit einteiligem Doppelkammkäfig in einem rationellen Fertigungsprozess und beim Einbau in die jeweilige Anwendung gestaltet sich jedoch hinsichtlich der Bestückung mit den Wälzkörpern mitunter relativ schwierig. Insbesondere bei metallischen, beispielsweise aus Messing gefertigten Doppelkammkäfigen in Zylinderrollenlagern mit äußeren Borden zur Führung und Halterung der Lagerreihen, erfolgt die Befüllung des Lagers mit den Wälzkörpern daher häufig notwendigerweise axial und radial. In einem ersten Schritt werden die Zylinderrollen einer ersten Lagerreihe axial in den Käfig geschoben, wozu der Käfig axial versetzt auf einem Lagerring positioniert wird und die Rollen anschließend über einen Außenbord axial in die Aufnahmetaschen eingeführt werden. Da der Käfig durch die Montage der ersten Lagereihe axial fixiert ist, können die Rollen der zweiten Lagerreihe nicht mehr über den Außenbord des Lagerrings sondern nur von oben, d.h. in radialer Richtung in die Käfigtaschen eingesetzt werden. Dazu müssen die Stege der zweiten Lagerreihe in Umfangsrichtung entsprechend verschmälert werden, so dass die radiale Rollenmontage möglich und zugleich die sichere Halterung und Führung gegen ein Herausfallen nach der Montage gegeben ist.

Aus den folglich unterschiedlich breiten Stegen der beiden Lagerreihen resultiert eine asymmetrische Massenverteilung im Wälzlager, die zu ungünstigen kinematischen Eigenschaften des Zylinderrollenlagers führen kann. Insbesondere kann das Wälzlager im Betrieb mit zunehmender Rotationsgeschwindigkeit zu einer asymmetrischen bzw. verkippten Positionierung des Doppelkammkäfigs tendieren, wodurch das Laufverhalten der Wälzkörper empfindlich gestört werden kann.

Vor diesem Hintergrund ist aus der JP 8 184 319 A ein Zylinderrollenlager mit einem Doppelkammkäfig mit einer asymmetrischen Massenverteilung zweier Lagerreihen bekannt, bei dem eine Ausbildung zur Montageerleichterung vorgesehen ist. Das Zylinderrollenlager umfasst einen bordlosen Innenring und ein Außenring mit Außenborden und einem Mittelbord. An einem der beiden Außenborde ist eine axial ausgerichtete Montagenut für das axiale Einschieben der Rollen der zugehörigen Lagerreihe ausgebildet. Die äußeren Enden der Stege dieser Reihe verlaufen angespitzt, indem sie radial innen einseitig schräg abgeschnitten sind. Dadurch sind die Aufnahmetaschen erweitert, so dass die Rollen von axial außen in einer angewinkelten Montagestellung über den Außenbord relativ leicht in die Aufnahmetaschen eingeführt werden können. Die Stege sind zwar auf dieser Käfigseite nicht verschmälert, um ein Befüllen von oben zu ermöglichen. Allerdings ist durch die Abschrägung der Stege der einen Lagerreihe und die Montagenut auf dieser Käfigseite eine asymmetrische Massenverteilung mit den oben beschriebenen nachteiligen Folgen gegeben.

### Aufgabe der Erfindung

Der Erfindung liegt die Aufgabe zugrunde, einen Doppelkammkäfig für ein zweireihiges Zylinderrollenlager zu schaffen, der die genannten Nachteile nicht aufweist. Insbesondere soll der Doppelkammkäfig mindestens an einer Lagerreihe von oben mit Wälzkörpern befüllbar sein und dennoch ein einwandfreies Laufverhalten besitzen sowie relativ einfach und kostengünstig in der Herstellung sein.

### Zusammenfassung der Erfindung

Der Erfindung liegt die Erkenntnis zugrunde, dass bei einem Doppelkammkäfig in einem zweireihigen Zylinderrollenlager ein gestörtes Laufverhalten aufgrund aus Montagenotwendigkeiten verschmälerter Stege an einer der beiden Lagerreihen sowie einer dadurch verursachten ungleichen Massenverteilung durch einfache und kostengünstige Maßnahmen im Bereich der anderen Lagerreihe, die diese einseitige Massenreduzierung kompensieren, vermieden werden kann.

Die Erfindung geht daher aus von einem Doppelkammkäfig für ein zweireihiges Zylinderrollenlager, mit einem zentralen Ringteil, von dem beidseitig Stege axial abstehen, wobei die Stege einer Seite zusammen mit den dort angeordneten Wälzkörpern jeweils eine Lagerreihe bilden, wobei je zwei benachbarte Stege einer Lagerreihe eine Aufnahmetasche für einen Wälzkörper begrenzen, und bei dem zumindest bei einer Lagerreihe die Stege in Umfangsrichtung für eine radiale Befüllung der Aufnahmetaschen mit den Wälzkörpern verschmälert ausgebildet sind. Gemäß der Erfindung ist zur Lösung der Aufgabe vorgesehen, dass an der anderen Lagerreihe Ausnehmungen zur Herstellung einer symmetrischen Massenverteilung zwischen den beiden Lagerreihen ausgebildet sind.

Unter der Breite eines Steges wird im Folgenden die Breite einer radial äußeren Grundseite des Steges in Umfangsrichtung verstanden. Variiert diese Breite in axialer Richtung, entgegen der konventionellen Gestaltung mit einer konstanten Stegbreite, dann wird als Stegbreite ein für eine radiale Wälzkörperbestückung relevantes Maß der radial äußeren Grundseite in Umfangsrichtung als Breite der Stege angenommen.

Erfindungsgemäß sind einem Doppelkammkäfig, bei dem eine radial zu befüllende Lagerreihe mit schmaleren Stegen versehen ist, zur Schaffung eines Massenausgleichs zwischen den beiden Lagerreihen, so dass beide Lagerreihen ein identisches oder zumindest nahezu identisches Gewicht aufweisen, als eine erste Maßnahme ausreichend große Axialbohrungen in den breiteren Stegen der anderen Lagerreihe ausgebildet.

Außerdem können die Aufnahmetaschen der Lagerreihe mit den breiteren Stegen entsprechend tiefer gebohrt, bzw. mit bodenseitigen Vertiefungen ausgebildet sein. Es ist auch möglich, in der Lagerreihe mit den breiteren Stegen Nuten im Bereich der Stege auszubilden. Weiterhin kann vorgesehen sein, dass gegebenenfalls vorhandene Zentrierbohrungen der Aufnahmetaschen in der Lagerreihe mit den breiteren Stegen entsprechend tiefer ausgebohrt sind.

Vorzugsweise sind die Ausnehmungen an der Lagerreihe mit den breiteren Stegen an allen Stegen bzw. an allen Aufnahmetaschen ausgebildet. Es ist jedoch grundsätzlich auch möglich, dass diese Maßnahmen, über den Umfang gleichmäßig verteilt, nur an einigen der Stege bzw. Aufnahmetaschen, beispielsweise an jedem zweiten Steg, ausgebildet sind.

Durch die genannten erfindungsgemäßen Maßnahmen für einen Doppelkammkäfig für zweireihige Zylinderrollenlager mit aus Montagegründen einseitig verschmälerten Stegen, wird eine symmetrische Massenverteilung der beiden Käfigseiten bzw. Lagerreihen erreicht und somit ein kinematisch gestörtes Laufverhalten des Käfigs vermieden.

Die Ausnehmungen können als Einzelmaßnahmen oder in Kombination an der betreffenden Lagerreihe ausgebildet sein. Grundsätzlich umfasst die Erfindung alle masseverringemden Ausnehmungen im Bereich derjenigen Lagerreihe, die nicht notwendigerweise radial zu befüllen ist, welche geeignet sind, die Massenverteilung zwischen beiden Seiten des Käfigs symmetrisch zu gestalten.

Als Ausnehmungen wird daher auch verstanden, dass (alternativ zu Nuten etc.) an den breiteren Stegen, die Stege beider Lagerreihen von vornherein geometrisch gleich ausgeführt sein können, d.h., dass die Stege beider Lagerreihen für die radiale Rollenmontage von oben gleichermaßen verschmälert ausgebildet sind, unabhängig davon, ob auch die erste Lagerreihe in der Praxis radial oder wie bisher axial befüllt wird. Je nach Anforderung und Belastung ist hierbei allerdings eine ausreichend stabile Rollenführung zu berücksichtigten.

Die Erfindung kann bei allen Doppelkammkäfigen für zweireihige Zylinderrollenlager, bei denen einseitig die Stegbreiten für eine Rollenmontage aus radialer Richtung anzupassen sind, vorteilhaft angewendet werden. Da diese Bauart bzw. Befüllungsart besonders bei Käfigen aus Messing oder Materialien mit vergleichbaren Eigenschaften relevant ist, kann eine erfindungsgemäße Konstruktion besonders bei solchen Käfigen für ein vorteilhaftes symmetrisches Laufverhalten sorgen. Grundsätzlich ist es auch möglich, den Doppelkammkäfig nicht einheitlich aus einem Material zu fertigen, sondern zwei Kammkäfige mit den erforderlichen unterschiedlichen Stegbreiten bzw. einseitig verringerten Stegbreiten aus unterschiedlich schweren Materialien herzustellen, welche die geometrische Ungleichheit kompensieren und anschließend die Seiten so zusammenzufügen, dass sich eine symmetrische Massenverteilung des Doppelkammkäfigs ergibt. Hierbei wäre jedoch der Kosten- und Konstruktionsaufwand zu berücksichtigen. Auf diese Möglichkeit wird daher nicht weiter eingegangen.

### Kurze Beschreibung der Zeichnungen

Die Erfindung wird im folgenden anhand der beiliegenden Zeichnung an einigen Ausführungsformen näher erläutert. Darin zeigt
- Fig. 1: einen Doppelkammkäfig für ein zweireihiges Zylinderrollenlager in einer perspektivischen Ansicht,
- Fig. 2: einen vergrößerten Ausschnitt der Umfangsansicht des Doppelkammkäfigs gemäß Fig. 1, mit schematisch dargestellten Ausnehmungen gemäß der Erfindung, und
- Fig. 3: einen vergrößerten Ausschnitt des Doppelkammkäfigs als Draufsicht der Fig. 1 mit schematisch dargestellten Ausnehmungen gemäß der Erfindung.

### Detaillierte Beschreibung der Zeichnungen

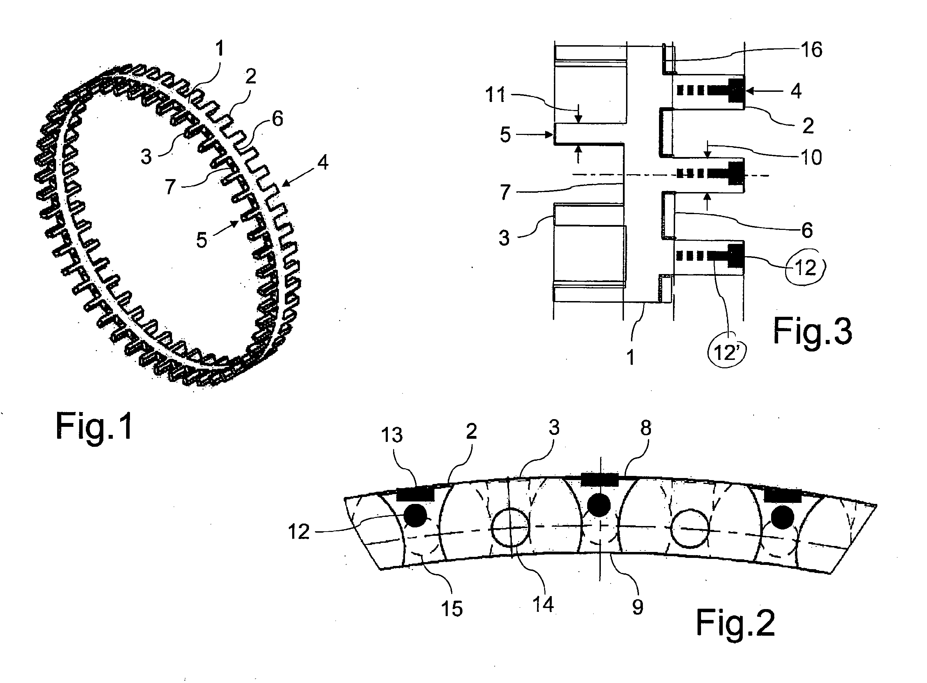

Der in Fig. 1 dargestellte, beispielsweise aus Messing einstückig hergestellte und zu einem Ring zusammengefügte Doppelkammkäfig für ein zweireihiges Zylinderrollenlager umfasst ein zentrales Ringteil 1, von dem beidseitig zueinander versetzte Stege 2, 3 axial abstehen. Die Stege 2, 3 der beiden axialen Seiten des Käfigs sind gleichmäßig über den Umfang verteilt angeordnet und bilden jeweils eine Lagerreihe 4, 5 für nicht dargestellte Wälzkörper bzw. Zylinderrollen. Je zwei benachbarte Stege 2 bzw. 3 bilden eine Aufnahmetasche 6 bzw. 7 für eine Zylinderrolle. Zur Halterung und Lagerung der Zylinderrollen in den Aufnahmetaschen 6, 7 können, wie in Fig. 2 angedeutet, die Stege 2, 3 zwischen einer radial äußeren Grundseite 8 und einer radial inneren Grundseite 9, in an sich bekannter Weise konturiert sein. Nicht dargestellte Außen- und Innenringe des Zylinderrollenlagers sind ebenfalls in an sich bekannter Weise ausgeführt und daher nicht weiter beschrieben.

Die Stege 2, 3 weisen in Umfangsrichtung eine Breite 10, 11 ihrer radial äußeren Grundseite 8 auf (Figuren 2 und 3), die an den beiden Lagerreihen 4,5 unterschiedlich ist. Während die Stege 2 der einen Lagerreihe 4 mit einer Breite 10 ausgeführt sind, welche nur eine Wälzkörperbefüllung in axialer Richtung, also von der Seite erlaubt, besitzen die Stege 3 der anderen Lagerreihe 5 demgegenüber eine schmalere Breite 11, die auch eine Wälzkörperbefüllung von radialer Richtung, also von oben, aufgrund der entsprechend weiteren Aufnahmetaschen 7 erlaubt. In axialer Richtung ist die Stegbreite 10, 11 beider Lagerreihen 4, 5 konstant.

Die Montage erfolgt in zwei Schritten. Zunächst wird der Doppelkammkäfig im Zylinderrollenlager axial versetzt positioniert. Die Zylinderrollen werden axial, gegebenenfalls über einen Außenbord des Außen- oder Innenringes, in die engeren Aufnahmetaschen 6 der Lagerreihe 4 mit den breiteren Stegen 2 eingefügt. Durch die montierte erste Lagerreihe 4 ist die axiale Lage des Doppelkammkäfigs im Wälzlager festgelegt. Im zweiten Schritt wird die zweite Lagerreihe 5 radial von oben mit Zylinderrollen bestückt, wobei die Zylinderrollen in die entsprechenden Aufnahmetaschen 7 eingefügt werden.

Um das Massenungleichgewicht zwischen den beiden Lagerreihen 4, 5 aufgrund der unterschiedlich breiten Stege 2, 3 auszugleichen, sind an den breiteren Stegen 2 als Axialbohrungen 12, 12' einzeln oder in Kombination mit Nuten 13'ausgebildete Ausnehmungen vorgesehen. Diese Ausnehmungen 12, 12', 13 sind in Fig. 2 bzw. Fig. 3 schematisch dargestellt. Die durch die breiteren Stege 2 begrenzten Aufnahmetaschen 6 weisen am Ringteil 1 eine bodenseitige Taschenvertiefung 16 auf. (Fig. 3). Weiterhin sind in den Aufnahmetaschen 6, 7 Zentrierbohrungen 14, 15 ausgebildet, wobei die Zentrierbohrungen 14 an der Lagerreihe 4 mit den breiteren Stegen 2 tiefer ausgebohrt sind (Fig. 2). Die Ausnehmungen 12, 12' sind als Maßnahmen zu verstehen, die einzeln oder in Kombination mit Ausnehmungen 13, 14 und 16 derart realisiert sind, dass eine symmetrische Massenverteilung zwischen beiden Lagerreihen 4, 5 hergestellt ist.

### Bezugszeichenliste

- 1: Ringteil
- 2: Steg
- 3: Steg
- 4: Lagerreihe
- 5: Lagerreihe
- 6: Aufnahmetasche
- 7: Aufnahmetasche
- 8: Grundseite
- 9: Grundseite
- 10: Stegbreite
- 11: Stegbreite
- 12, 12': Ausnehmung, Axialbohrung
- 13: Ausnehmung, Nut
- 14: Ausnehmung, Zentrierbohrung
- 15: Zentrierbohrung
- 16: Ausnehmung, Taschenvertiefung

## Patentansprüche

1. Doppelkammkäfig für ein zweireihiges Zylinderrollenlager, mit einem zentralen Ringteil (1), von dem beidseitig Stege (2, 3) axial abstehen, wobei die Stege (2; 3) einer Seite zusammen mit den dort angeordneten Wälzkörpern jeweils eine Lagerreihe (4; 5) bilden, wobei je zwei benachbarte Stege (2; 3) einer Lagerreihe (4; 5) eine Aufnahmetasche (6; 7) für einen Wälzkörper begrenzen, und bei dem zumindest bei einer Lagerreihe (5) die Stege (3) in Umfangsrichtung für eine radiale Befüllung der Aufnahmetaschen (7) mit den Wälzkörpern verschmälert ausgebildet sind, wobei an der anderen Lagerreihe (4) Ausnehmungen (12, 12', 13, 14, 16) zur Herstellung einer symmetrischen Massenverteilung zwischen den beiden Lagerreihen (4; 5) ausgebildet sind, **dadurch gekennzeichnet, dass** die breiteren Stege (2) der anderen Lagerreihe (4) zumindest teilweise derart mit Axialbohrungen (12, 12') versehen sind, dass das Gewicht der beiden Lagerreihen (4; 5) aneinander angeglichen ist.

2. Doppelkammkäfig nach Anspruch 1, **dadurch gekennzeichnet, dass** die breiteren Stege (2) der anderen Lagerreihe (4) zumindest teilweise derart mit Nuten (13) versehen sind, dass das Gewicht der beiden Lagerreihen (4, 5) aneinander angeglichen ist.

3. Doppelkammkäfig nach Anspruch 1 oder 2, **dadurch gekennzeichnet, dass** die Aufnahmetaschen (6) der Lagerreihe (4) mit den breiteren Stegen (2) zumindest teilweise an dem Ringteil (1) derart mit Vertiefungen (16) versehen sind, dass das Gewicht der beiden Lagerreihen (4, 5) aneinander angeglichen ist.

4. Doppelkammkäfig nach einem der Ansprüche 1 bis 3, **dadurch gekennzeichnet, dass** die Aufnahmetaschen (6, 7) der beiden Lagerreihen (4; 5) an dem Ringteil (1) Zentrierbohrungen (14, 15) aufweisen, wobei die Zentrierbohrungen (14) in der Lagerreihe (4) mit den breiteren Stegen (2) tiefer ausgebildet sind als die Zentrierbohrungen (15) in der Lagerreihe (5) mit den schmaleren Stegen (3), derart, dass das Gewicht der beiden Lagerreihen (4, 5) aneinander angeglichen ist.

5. Doppelkammkäfig nach Anspruch 1, **dadurch gekennzeichnet, dass** die Breite (11) der Stege (3) an beiden Lagerreihen (4, 5), für eine radiale Befüllung der Aufnahmetaschen (6, 7) mit den Wälzkörpern, gleichermaßen verschmälert ist.

6. Doppelkammkäfig nach einem der Ansprüche 1 bis 5, **dadurch gekennzeichnet, dass** der Doppelkammkäfig aus Messing oder einem vergleichbaren Material hergestellt ist.

## Claims

1. Double roller cage for a double-row cylindrical roller bearing, with a central ring part (1), from which webs (2, 3) project axially on both sides, the webs (2; 3) of one side forming, together with the rolling bodies arranged there, in each case a bearing row (4; 5), in each case two adjacent webs (2; 3) of a bearing row (4; 5) delimiting a reception pocket (6; 7) for a rolling body, and in which, at least in the case of one bearing row (5), the webs (3) are formed so as to be narrowed in the circumferential direction for filling the reception pockets (7) radially with the rolling bodies, there being formed on the other bearing row (4) recesses (12, 12', 13, 14, 16) for affording symmetrical mass distribution between the two bearing rows (4; 5), **characterized in that** the wider webs (2) of the other bearing row (4) are provided at least partially with the axial bores (12, 12') in such a way that the weights of the two bearing rows (4; 5) are equated to one another.

2. Double roller cage according to Claim 1, **characterized in that** the wider webs (2) of the other bearing row (4) are provided at least partially with grooves (13) in such a way that the weights of the two bearing rows (4, 5) are equated to one another.

3. Double roller cage according to Claim 1 or 2, **characterized in that** the reception pockets (6) of the bearing row (4) having the wider webs (2) are provided at least partially on the ring part (1) with depressions (16) in such a way that the weights of the two bearing rows (4, 5) are equated to one another.

4. Double roller cage according to one of Claims 1 to 3, **characterized in that** the reception pockets (6, 7) of the two bearing rows (4; 5) have centring bores (14, 15) on the ring part (1), the centring bores (14) in the bearing row (4) with the wider webs (2) being formed so as to be deeper than the centring bores (15) in the bearing row (5) with the narrower webs (3), in such a way that the weights of the two bearing rows (4, 5) are equated to one another.

5. Double roller cage according to Claim 1, **characterized in that** the width (11) of the webs (3) on the two bearing rows (4, 5) is narrowed equally for filling the reception pockets (6, 7) radially with the rolling bodies.

6. Double roller cage according to one of Claims 1 to 5, **characterized in that** the double roller cage is produced from brass or from a comparable material.

## Revendications

1. Cage de type double peigne pour un palier à rouleaux cylindriques à deux rangées, comprenant une partie annulaire centrale (1) de laquelle des nervures (2, 3) font saillie axialement des deux côtés, les nervures (2, 3) d'un côté formant conjointement avec les corps de roulement s'y trouvant une rangée de palier respective (4 ; 5), deux nervures adjacentes (2 ; 3) d'une rangée de palier (4 ; 5) délimitant à chaque fois une cavité de réception (6 ; 7) pour un corps de roulement, et au moins pour une rangée de palier (5), les nervures (3) étant réalisées de manière plus étroite dans la direction périphérique pour un remplissage radial des cavités de réception (7) avec les corps de roulement, des évidements (12, 12', 13, 14, 16) étant réalisés sur l'autre rangée de palier (4) pour produire une répartition de masse symétrique entre les deux rangées de palier (4 ; 5), **caractérisée en ce que** les nervures plus larges (2) de l'autre rangée de palier (4) sont pourvues au moins en partie d'alésages axiaux (12, 12') de telle sorte que les poids respectifs des deux rangées de palier (4 ; 5) soient identiques.

2. Cage de type double peigne selon la revendication 1, **caractérisée en ce que** les nervures plus larges (2) de l'autre rangée de palier (4) sont pourvues au moins en partie de rainures (13) de telle sorte que les poids respectifs des deux rangées de palier (4 ; 5) soient identiques.

3. Cage de type double peigne selon la revendication 1 ou 2, **caractérisée en ce que** les cavités de réception (6) de la rangée de palier (4) ayant les nervures plus larges (2) sont pourvues au moins en partie au niveau de la partie annulaire (1) de renfoncements (16), de telle sorte que les poids respectifs des deux rangées de palier (4 ; 5) soient identiques.

4. Cage de type double peigne selon l'une quelconque des revendications 1 à 3, **caractérisée en ce que** les cavités de réception (6, 7) des deux rangées de palier (4 ; 5) présentent, au niveau de la partie annulaire (1), des alésages de centrage (14, 15), les alésages de centrage (14) dans la rangée de palier (4) ayant les nervures plus larges (2) étant plus profonds que les alésages de centrage (15) dans la rangée de palier (5) ayant les nervures plus étroites (3), de telle sorte que les poids respectifs des deux rangées de palier (4 ; 5) soient identiques.

5. Cage de type double peigne selon la revendication 1, **caractérisée en ce que** la largeur (11) des nervures (3) au niveau des deux rangées de palier (4, 5) est rétrécie dans une même mesure pour un remplissage radial des cavités de réception (6, 7) avec les corps de roulement.

6. Cage de type double peigne selon l'une quelconque des revendications 1 à 5, **caractérisée en ce que** la cage de type double peigne est fabriquée en laiton ou en un matériau comparable.
